# FASCICULE DE BREVET EUROPEEN

(11) **EP 0 520 921 B1**
(45) Date de publication et mention de la délivrance du brevet: **21.05.1997**
(21) Numéro de dépôt: 92460020.8
(22) Date de dépôt: 25.06.1992
(51) Int. Cl.: C02F 1/44, B01D 61/02, C02F 9/00

(54) **Chaîne de traitement des eaux de surface à barrière de sécurité, barrière de sécurité, et applications correspondantes**
Anlage zur Behandlung von Oberflächenwasser mit Rückhaltesicherung, Rückhaltesicherung, und deren Verwendung
Treatment line for surface water including a security barrier, security barrier and corresponding applications

(30) Priorité: 26.06.1991 FR 9108138
(43) Date de publication de la demande: 30.12.1992
(73) Titulaire: OTV S.A., 94417 Saint-Maurice Cédex (FR)
(72) Inventeur: Bourbigot, Marie-Marguerite, F-92380 Garches (FR); Faivre, Michel, F-78260 Acheres (FR); Sibony, Jacques, F-75018 Paris (FR); Corsin, Pierre, F-78150 Rocquencourt (FR)
(74) Mandataire: Corlau, Vincent

(56) Documents cités:
- EP-A- 0 104 648
- EP-A- 0 250 019
- FR-A- 2 236 792
- US-A- 3 838 774
- US-A- 4 787 980
- JOURNAL WATER POLLUTION CONTROL FEDERARION vol. 59, no. 7, Juillet 1987, ALEXANDRIA, VA., USA pages 722 - 732 S.E.ROGERS ET AL. 'ORGANIC CONTAMINANTS REMOVAL FOR POTABLE REUSE'
- DESALINATION vol. 66, no. 1, Décembre 1987, AMSTERDAM pages 423 - 430 H.AL- RQOBAH ET AL. 'OPTIMIZATION OF CHEMICAL PRETREATMENT FOR REVERSE OSMOSIS (RO) SEAWATER DESALINATION'
- PATENT ABSTRACTS OF JAPAN vol. 3, no. 55 (C-45)11 Mai 1979
- DESALINATION vol. 77, no. 1-3, Mars 1990, AMSTERDAM pages 73 - 84 R.RAUTENBACH ET AL. 'SEPARATION POTENTIAL OF NANOFILTRATION MEMBRANES'

## Description

Le domaine de l'invention est celui des installations de filtration et d'épuration de liquides, notamment pour le traitement des eaux.

L'installation de l'invention s'applique plus particulièrement, au traitement des eaux du type susceptible de présenter une grande variabilité de qualité, notamment aux eaux de surface ou de caractéristiques équivalentes. Toutefois, l'homme du métier pourra envisager d'en utiliser le principe pour le traitement des eaux usées ou brutes à d'autres étapes de la chaîne d'épuration, ou encore pour le traitement d'autres liquides.

Le traitement des eaux de surface est mis en oeuvre tant pour clarifier des eaux d'écoulement ou de rejet alimentant un réservoir naturel (nappes, fleuves et rivières, ...), que pour assurer directement la distribution d'eaux de consommation. Compte tenu des normes aujourd'hui en vigueur, le traitement a les objectifs principaux suivants:
- éliminer les matières en suspension,
- éliminer les matières organiques,
- éliminer les ions indésirables,
- stériliser.

Parmi les polluants organiques et/ou ioniques à éliminer, on trouve des hydrocarbures, ainsi que certains composés organohalogénés. Une circulaire de la Direction Générale de la Santé adressée aux préfets de région et de département en date du 16 mai 1989 souligne ainsi que la présence de composés organohalogénés volatils a été mise en évidence à partir des années 70 dans les eaux traitées destinées à la consommation humaine. Du trichloréthylène a aussi été identifié dans des nappes. Selon cette circulaire, les travaux menés dans différents pays, notamment en France, pour mieux connaître ces produits et les risques associés ont abouti à l'élaboration de normes et recommandations :
- la directive CEE 80/778 du 15 juillet 1980 du Conseil des Communautés Européennes comporte une recommandation générale présentée sous la forme "autres composés organochlorés ne relevant pas du paramètre n°55 : niveau guide : 1 microgramme par litre ; la concentration en haloformes doit être réduite dans toute la mesure du possible".
- les dispositions publiées en 1984 par l'Organisation Mondiale de la Santé sur la qualité des eaux destinées à la consommation humaine comportent des valeurs guides devant permettre aux etats Membres de fixer des teneurs limites nationales pour certains produits.

Selon l'Organisation Mondiale de la Santé, les valeurs suivantes sont notamment recommandées comme concentrations limites de ces produits dans les eaux destinées à la consommation humaine :

| | |
|---|---|
| - tétrachlorure de carbone | 3 microgrammes par litre |
| - 1,2 dichloroéthane | 10 microgrammes par litre |
| - tétrachloroéthylène | 10 microgrammes par litre |
| - trichoréthylène | 30 microgrammes par litre |
| - chloroforme | 30 microgrammes par litre |
| - chlorométhane | 30 microgrammes par litre |

Une chaîne de traitement classique comprend la plupart du temps une succession d'étapes physico-chimiques du type coagulation-floculation/décantation/filtration (notamment filtration sur sable).

A la suite de l'opération de filtration, l'eau est ensuite classiquement débartassée des micro-organismes pathogènes, des micropolluants, des métaux lourds à l'état de trace, et des mauvais goûts et saveurs à l'aide d'oxydants (ozone, chlore...) ou de rayonnements (U.V), couplés généralement à un traitement d'affinage au charbon actif en grains ou en poudre.

On connait aussi dans l'état de la technique, un procédé de potabilisation de l'eau mettant en oeuvre une série filtres de plus en plus fins suivie d'une unité de charbon actif. Un tel procédé est décrit dans EP-A-0250 019.

Pour l'élimination des micropolluants, il existe également d'autres traitements particuliers, tels que par exemple le stripping (aération forcée) ou encore le filtrage dans un sable formé de billes de résine chargées électriquement, jouant le rôle de capteurs d'ions. Ces sables présentent un grand intérêt pour l'adoucissement de l'eau (décarbonatation, désulfatation, ...) mais sont peu efficaces vis-à-vis par exemple des chlorures, ou encore des matières organiques.

La filière ozone/charbon est relativement efficace lorsque la qualité de l'eau brute à traiter est connue et stable.

Néanmoins, ces techniques comptent des limitations:
- l'ozonation est efficace pour éliminer les solvants chlorés éthyléniques comme le tértrachloroéthylène ou le trichloroéthylène. par contre, elle n'a qu'une action très limitée ou nulle sur les THM (chloroforme, dichlorobrométhane, dibromochlorométhane, bromoforme). De plus, les taux d'ozone nécessaires pour oxyder les composés éthyléniques sont élevés, et représentent donc un coût important. Des couplages oxydants ozone/UV, ozone/H₂0₂ peuvent être utilisés pour certains solvants chlorés ayant au moins une liaison C-H, avec des rendements variables ;
- le traitement par charbon actif en grain consiste à adsorber les molécules de solvants chlorés dissoutes dans l'eau par filtration sur filtre ouvert ou sur filtre sous pression. Mais l'efficacité d'un charbon actif dépend de la nature du composé chloré à éliminer et de sa concentration. Moins la molécule sera polaire et de taille importante, moins elle sera adsorbée par le charbon actif.

De plus, ces traitements sont difficiles à réguler en cas de grande variabilité de la qualité de l'eau brute. Dans cette hypothèse, la teneur en réactif devrait en effet être réajustée constamment par exemple à la teneur en micropolluants, de façon à optimiser le traitement. Un traitement insuffisant est inadmissible, et une teneur surabondante en réactifs est anti-économique, voire dangereuse.

Or, on rencontre fréquemment de grandes variabilités de qualité dans les eaux de surface.

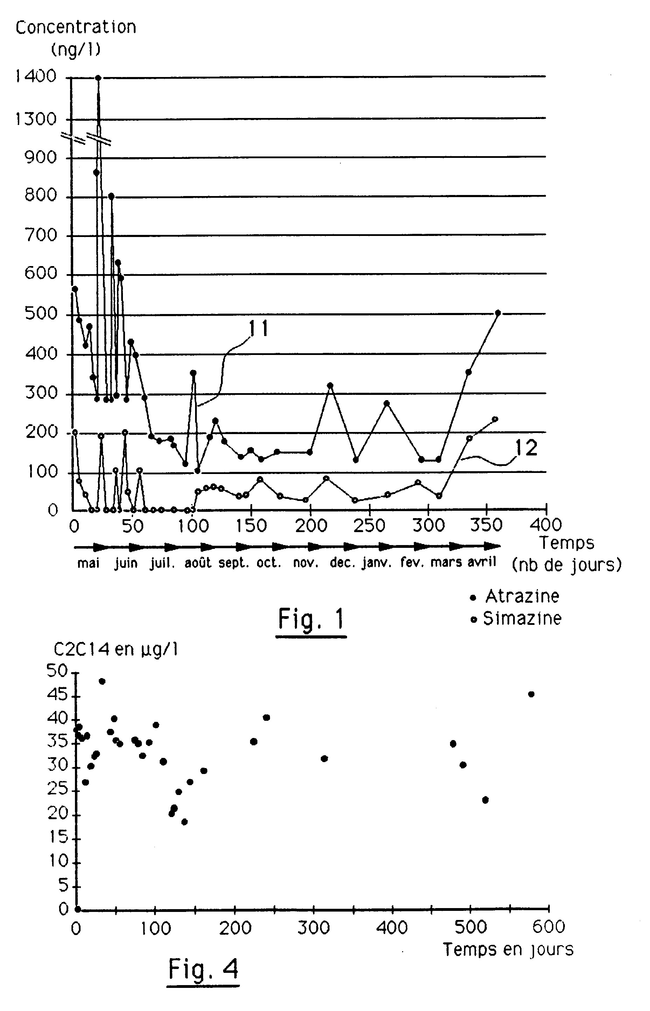

A titre d'exemple, la figure 1 représente la variation de concentration (en ng/l) de deux pesticides azotés dans l'eau brute d'un affluent de la Seine, sur un an de mai 1989 à mai 1990. La courbe 11 représente l'évolution de la concentration en atrazine, et la courbe 12 représente l'évolution de la concentration en simazine.

L'atrazine est un herbicide constitué par la chloro-2 éthylamino-4 isopropylamino-6 *s*-triazine.

La simazine est le nom générique d'une famille d'herbicides de formule ClC₃N₃(NHC₂H₅)₂ ou chloro-2 *bis* (éthylamino)-4, 6 *s*-triazine.

Au cours d'essais qui ont été menés pour traiter cet affluent avec une installation classique, on n'a noté aucune corrélation satisfaisante entre la présence d'atrazine et les autres paramètres caractéristiques de la qualité de l'eau brute (turbidité, UV 254nm, matière organique, couleur, pH). Il n'y a pas non plus de relation nette entre le débit de la rivière et les teneurs en pesticides azotés. L'apparition des triazines à partir d'avril est essentiellement liée aux pratiques culturales locales et est probablement fonction de la pluviométrie. Il n'existe aucun paramètre simple indicateur de la présence ou de l'apparition des pesticides azotés dans l'eau brute.

Cette absence de corrélation rend d'autant plus difficile la régulation des traitements d'élimination.

Compte tenu des faibles concentrations dans l'eau brute, le simazine est éliminé de manière satisfaisante par la filière de traitement classique, à quelques exceptions près. L'atrazine, en concentration beaucoup plus élevée dans l'eau brute est moins bien éliminée par la filière classique. La norme de 0,1 µg/l dans l'eau traitée ne peut pas être respectée une partie de l'année.

L'abattement obtenu au cours de la floculation-décantation est très faible (5 % en moyenne). L'abattement dans les filtres à sable atteint de l'ordre de 20 % en moyenne grâce probablement à la faible vitesse de filtration (3,3 m/h). après l'étape finale d'ozonation sur l'usine le rendement d'élimination global n'est que de 30 % en moyenne sur l'atrazine. L'étape finale d'ozonation présente cependant un taux de traitement faible de 0,85 mgO₃/l. Avec un taux d'ozonation de 2 mg0₃/l, le rendement moyen d'élimination de l'atrazine atteint près de 60 % (sur prototype); avec une combinaison ozone + péroxyde d'hydrogène, ce rendement peut atteindre 90 %.

Mais, dans ces situations, les "pics de concentration" ne peuvent être absorbés qu'avec un système de régulation.

L'invention a pour objectif de pallier ces divers inconvénients, en proposant un nouveau principe de chaîne de traitement applicable notamment au traitement des eaux brutes à forte variabilité en micropolluants.

Plus précisément, un premier objectif de l'invention est de fournir une chaîne de traitement des eaux de surface qui présente un pouvoir de coupure fiable vis-à-vis des micropolluants, pour un large spectre de micropollution (y compris la micropollution radioactive), et des situations à fort taux de variabilité.

Un autre objectif de l'invention est de fournir une telle chaîne de traitement à prix de revient optimisé.

Un autre objectif de l'invention est de fournir une chaîne de traitement qui soit applicable dans de nombreux cas d'eau de surface, depuis les eaux de lessivage des pistes d'aéroports jusqu'aux eaux d'exhaure de puits de mines.

Ces objectifs, ainsi que d'autres qui apparaîtront par la suite, sont atteints selon l'invention à l'aide d'une chaîne de traitement des eaux de surface du type susceptible de présenter une grande variabilité de qualité, notamment en vue de leur potabilisation, comprenant :
- une installation de prétraitement ;
- une barrière de sécurité montée en sortie de la chaîne de traitement et constituée dun filtre physique assurant en sortie dudit filtre une qualité minimale prédéterminée quelque soit la qualité de l'eau en entrée dudit filtre; et
caractérisée en ce que ladite barrière de sécurité est constituées par au moins une membrane de nanofiltration et en ce qu'elle comprend de plus :
- des moyens de mesure d'une information de qualité courante d'eau fournie situés en entrée de ladite barrière de sécurité appartennant au groupe constitué par les capteurs de turbidité, de pH, de résistivité, de C.O.T., d'absorption U.V, de mesure de la teneur en baryum ; et,
- des moyens d'ajustement de l'intensité de traitement de ladite installation de prétraitement reliés auxdits moyens de mesure.

Les moyens de mesure sont par exemple situés au niveau d'une cartouche de préfiltrage de protection montée en amont immédiat de ladite barrière de sécurité.

Selon une variante particulièrement intéressante, lesdits moyens de mesure sont constitués par un capteur de C.O.T.

Il a en effet été constaté qu'il existait une corrélation entre le taux de matière organique de l'eau prétraitée arrivant au niveau de ladite barrière de sécurité et le pourcentage d'élimination des micropolluants. D'une façon tout a fait surprenante, il apparait que si la teneur en matière organique de l'eau arrivant au niveau du filtre est trop faible, l'abattement des micropolluants sera moins bon que si la teneur en matière organique est régulée, grâce à un capteur de C.O.T., dans une fourchette de valeurs optimales assurant une clarification efficace tout en permettant une élimination très poussée des micropolluants.

En d'autre termes, il existe une interaction de la matière organique sur l'élimination des micropolluants.

L'origine et les mécanismes de cette interaction ne sont pas précisément connus. On peut raisonnablement supposer que la matière organique subsistant dans l'eau filtrée permet des pontages avec les molécules de micropolluants aboutissant à la formation de complexes possédant un encombrement stérique important susceptibles d'être stopés plus facilement par la membrane de filtration. Par ailleurs, la matière organique naturellement chargée de façon négative contribue, lorsqu'elle se lie aux micropolluants, à favoriser la répulsion de ceux-ci par la membrane de filtration, également chargée négativement.

L'invention concerne donc également un procédé de mise en oeuvre de ladite chaîne de traitement, permettant d'obtenir une élimination très poussée des micropolluants de l'eau filtrée par ladite barrière de sécurité. Ce procédé consiste à ajuster le taux de matière organique présente dans l'eau arrivant au niveau de ladite barrière de sécurité, de façon à fixer ce taux dans une fourchette de valeurs optimales d'élimination des micropolluants.

Ce procédé va à l'encontre des procédés jusqu'ici mis en oeuvre qui tendaient tous à orienter le traitement de l'eau vers une clarification la plus poussée possible conjointement à une élimination la plus poussée possible des micropolluants sur cette eau ainsi clarifiée. D'une façon tout à fait originale, l'invention propose de clarifier l'eau destinée à être filtrée tout en ajustant la quantité de matière organique de cette eau afin d'optimiser l'élimination des micropolluants.

Selon une variante de l'invention, l'étape du procédé consistant à ajuster le taux de matière organique de l'eau prétraitée arrivant au niveau de ladite barrière de sécurité est effectuée en maintenant un taux optimal de matière organique naturelle dans l'eau prétraitée par ladite installation de prétraitement. De cette façon le traitement de l'eau est orienté pour obtenir une bonne clarification de celle-ci afin d'éviter le colmatage des membranes, tout en maintenant une proportion suffisante de matière organique permettant d'optimiser l'élimination des micropolluants. Il s'agit donc là d'une conception nouvelle de la clarification.

Selon une autre variante de l'invention, l'étape consistant à ajuster le taux de matière organique de l'eau arrivant au niveau de ladite barrière de sécurité est effectuée en ajoutant à l'eau prétraitée une quantité donnée de matière organique permettant ainsi de fixer le taux de matière organique dans ladite fourchette de valeur optimale.

Avantageusement, l'étape consistant à ajuster le taux de matière organique est accompagné d'une étape consistant à ajouter au moins un composé biocide non-oxydant à l'eau arrivant au niveau de ladite barrière de sécurité. Ce composé biocide non-oxydant permet d'éliminer les micro-organismes susceptibles de profiter de la présence de la matière organique ajoutée et augmentant les risques de colmatage de la membrane, tout en ne détruisant ni la membrane ni la matière organique utilisée pour optimiser l'élimination des micropolluants. A titre de composé biocide non oxydant, on peut notamment utiliser des micro-traces d'argent.

Selon un aspect tout particulièrement intéressant de l'invention, ladite matière organique ajoutée peut être constituée au moins en partie par au moins un composé biocide. Ce composé remplit ainsi un double rôle. D'une part il contribue à améliorer l'élimination des micropolluants et d'autre part il permet d'éliminer les micro-organismes nuisibles au fonctionnement de la membrane.

Selon un autre aspect de l'invention, ladite matière organique ajoutée peut être constituée par au moins un polymère anionique, cationique ou non ionique utilisé(s) dans la phase de clarification de l'eau, à un taux tel qu'il permette également de favoriser l'élimination des micropolluants. L'augmentation du taux de polymère permet ainsi d'obtenir une bonne clarification de l'eau avec un taux de coagulant minéral réduit, ce qui évite d'éliminer de façon trop poussée la matière organique, le polymère pouvant de plus constituer lui-même ce support de matière organique que l'on recherche.

Préférentiellement, l'installation de prétraitement comprend :
- soit une chaîne de clarification de type formée d'une séquence floculation/décantation/filtration sur sable ;
- soit une installation de microfiltration et/ou d'ultrafiltration ;
- soit les deux types précédents, insérés sélectivement, ensemble ou séparément, dans ladite installation de prétraitement en fonction de l'information fournie par les moyens de mesure.

Selon une caractéristique essentielle de l'invention, la barrière de sécurité est constituée par une membrane de nanofiltration présentant un pouvoir de coupure de l'ordre de 200 - 300 (poids moléculaire), avantageusement utilisée à faible pression, de l'ordre de 4 à 30 bar, préférentiellement 5 à 10 bar.

Selon une autre variante de l'invention, ladite barrière de sécurité est constituée d'une première membrane présentant un premier pouvoir de coupure, couplée à au moins une seconde membrane présentant un second pouvoir de coupure supérieur audit premier pouvoir de coupure, ladite seconde membrane étant montée en "série-rejet" en aval de ladite première membrane, le filtrat général produit par ladite barrière de sécurité étant formé par la conjonction des filtrats issus de l'ensemble desdites membranes.

D'autres caractéristiques et avantages de l'invention apparaîtront à la lecture de la description suivante d'un mode de réalisation préférentiel de l'invention, et des dessins annexés dans lesquels :
- la figure 1 représente les courbes de variation de la concentration en pesticides de l'eau brute d'un affluent de la Seine, sur un an ;
- la figure 2 schématise une chaîne de traitement selon l'invention ;
- la figure 3 représente une installation de prétraitement selon l'invention utilisable dans la chaîne de traitement de la figure 2 ;
- la figure 4 représente un exemple de courbe de variation, au cours du temsp, de la concentration en tétrachloroéthylène dans l'eau brute d'un puits de captage, auquel peut être appliqué la chaîne de traitement de l'invention ;
- la figure 5 schématise un mode de réalisation particulier de la barrière de sécurité de l'invention, constitué d'une membrane de nanofiltration associée à deux membranes d'osmose inverse en série-rejet.

Le principe général de l'invention consiste à mettre en oeuvre une chaîne de traitement formée de la combinaison suivante :
- placer une barrière de sécurité en sortie de la chaîne de traitement,
- assurer un prétraitement en amont de ladite barrière de sécurité, de façon à obtenir, en régime courant, une eau de très belle qualité à l'entrée de la barrière de sécurité.

Avantageusement, la barrière de sécurité est constituée d'un filtre physique sous la forme d'une membrane de nanofiltration. De telles membranes sont par exemple vendues sous la dénomination FILMTEC (marque déposée) par la société américaine Dow Chemical. A titre d'exemple, les références NF40, ou encore NF70 sont utilisables.

Un type de membrane utilisable dans l'invention est aussi notamment décrit dans les documents de brevet des Etats-Unis d'Amérique US-A 4259183, US-A 4765847 et US-A 4824574.

De façon classique, ce type de membrane est généralement utilisé pour mettre en oeuvre des procédés d'osmose inverse, sous des pressions relativement importantes (de l'ordre de 30 bar), notamment pour déssaler l'eau de mer. Dans ces applications, l'objectif est principalement de filtrer les composés ioniques des eaux à traiter.

Ces membranes sont généralement chargées électriquement négativement et jouent un rôle répulsif vis-à-vis des cations contenus dans le liquide à traiter.

Dans l'utilisation nouvelle de l'invention, en sortie des usines de traitement, la membrane de nanofiltration sert à l'élimination des micropolluants, notamment les matières organiques, particulièrement pour l'écrêtage des pics de concentration non traités dans la filière de prétraitement.

Le type de membrane le plus adéquat présente un pouvoir de rétention pour les molécules de poids moléculaire supérieur à 200 - 300.

Pour faire travailler les membranes de nanofiltration dans de bonnes conditions, il est important de donner un objectif de qualité stricte à l'installation de prétraitement située en amont. Notamment, au moins l'une des deux conditions suivantes doit avantageusement être respectée, en régime courant :
- le colmatage (fouling) doit être inférieur à 3 environ (Silt Density Index : Index de Densité de Dépôt) ; ce critère est le critère principal ;
- la turbidité de l'eau en entrée de la membrane doit être inférieure à 0,3 environ (Nephelometry Turbidity Unit : Unité de Turbidité Néphélométrique).

Ceci suppose de maîtriser correctement le prétraitement. Le colmatage de membrane est en effet notamment causé par des particules et des composants colloïdaux, qui se concentrent à la surface de la membrane, et ne peuvent être éliminés que par nettoyage chimique.

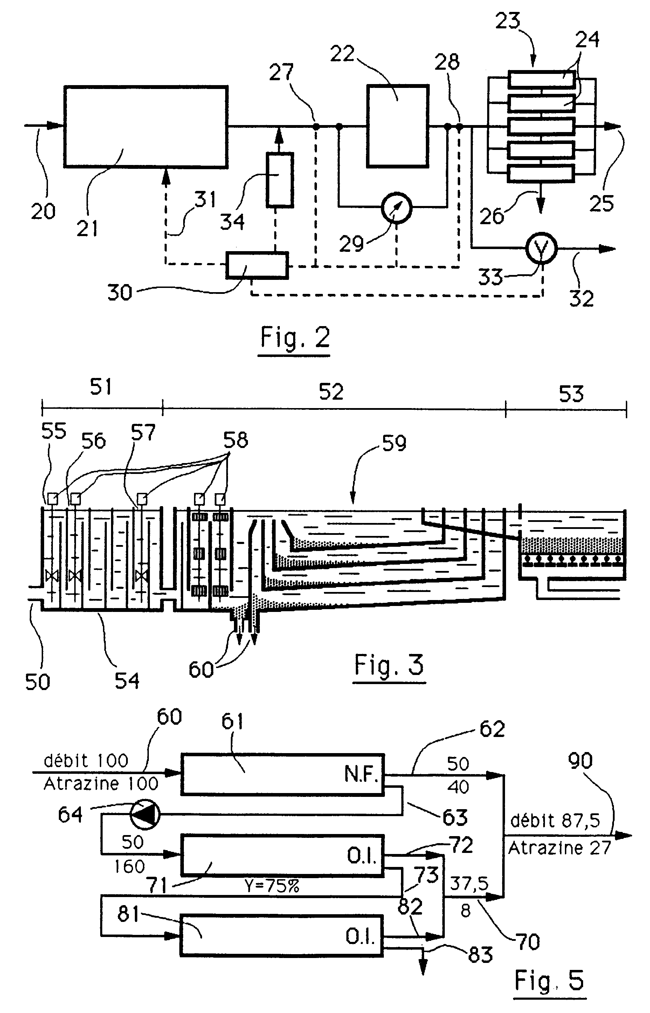

La figure 2 schématise un exemple de chaîne de traitement selon l'invention.

L'eau brute 20 est prétraitée dans une installation de prétraitement 21, satisfaisant aux objectifs de qualité requis.

L'eau prétraitée traverse ensuite une cartouche 22, avant d'être filtrée par la barrière de sécurité 23 constituée d'une batterie de membranes de nanofiltration 24 en parallèle. Ces membranes de nanofiltration sont des membranes tangentielles, et fournissent le filtrat 25, en rejetant l'eau non filtrée 26 qui peut être recyclée.

Bien évidemment, le rétentat 26 doit subir toutes les opérations de traitement adéquates, en fonction de son utilisation ultérieure, par exemple par couplage d'opérations du type ozone/péroxyde ou encore ozone/traitement catalytique.

Dans un mode de réalisation particulier, une unité de filtration sur Charbon Actif en Grains peut être montée en aval des membranes de nanofiltration 24. La nanofiltration permet essentiellement d'éliminer toutes les molécules de poids moléculaire supérieur à 200-250. Toutefois, le perméat contient encore des molécules de ce type à l'état de trace. Des essais réalisés ont en effet révélé, par exemple, la persistance de la présence de carbone organique réfractaire, dans une concentration de 0,1 à 0,3 mg/l. Le couplage de l'unité de microfiltration 24 avec une unité de traitement CAG en aval des membranes permet de parfaire efficacement l'élimination de ce type de micropollution, le CAG jouant pleinement le rôle d'adsorbant spécifique de ce type de molécules.

La chaîne de traitement comporte avantageusement des capteurs 27, 28, 29 interposés entre l'installation de prétraitement 21 et la batterie 23 de nanofiltres 24.

Ces capteurs peuvent être de tous types permettant de détecter une insuffisance de l'action de prétraitement, c'est-à-dire par exemple un risque de colmatage, ou un pic inhabituel de pollution. Ces capteurs sont par exemple des capteurs de turbidité, de pH, de résistivité, de C.O.T., d'adsorption U.V, compteur de particules, ...

Le capteur 29 est avantageusement un capteur de perte de charge dans la cartouche de préfiltrage de protection 22.

Les informations en provenance des capteurs 27, 28, 29 alimentent une centrale d'alerte et de contrôle 30. La centrale 30 peut avantageusement délivrer un signal 31 d'asservissement de l'installation de prétraitement 21 en fonction des informations de mesure des capteurs 27, 28, 29.

Avantageusement, les capteurs 27, 28 comprennent également un capteur de pH et/ou un capteur de concentration de certains sels critiques. Ainsi, on peut mesurer de façon périodique ou permanente la teneur en baryum des eaux prétraitées. Les sels de baryum (notamment les sulfates sur le chlorure de baryum) risquent en effet de précipiter, lorsqu'ils sont présents en trop forte concentration, pour un pH donné, et donc de colmater les membranes de nanofiltration.

Il en est de même en cas de trop forte concentration d'autres sels minéraux, ou d'autres produits.

Les mesures de concentration et de pH peuvent alors avantageusement piloter, via la centrale de commande 30, soit des modules spécifiques de l'installation de prétraitement 21, soit des moyens spécifiques d'"intertraitement" 34.

Ces moyens d'intertraitement 34 consistent par exemple à injecter des réactifs chimiques, du type acidifiant ou séquestrant, connus de l'homme du métier.

De plus, dans le cas où les valeurs mesurées dépasseraient un seuil de risque prédéterminé sans possibilité de palliatif, on peut prévoir une mise hors circuit de la membrane de nanofiltration par une conduite de dérivation 32 comportant une vanne de "by-pass" 33 asservie par l'unité 30 de contrôle et de commande.

D'autres critères de seuil de risque de colmatage ou de destruction de la membrane 24 peuvent également commander la mise hors circuit de ladite membrane, comme il pourra être déterminé par l'homme du métier.

La figure 3 présente un exemple d'installation de traitement utilisable dans la chaîne de traitement de la figure 2.

L'eau à traiter 50 subit un processus de successivement trois étapes:
- une étape de prétraitement initial 51,
- une étape de floculation-décantation 52,
- une étape de filtration sur sable 53.

Le prétraitement initial 51 est essentiellement une coagulation provoquée par réactifs chimiques introduits dans une cuve de traitement 54 à quatre compartiments. L'ordre d'introduction des réactifs est déterminé de manière à éviter les interférences.

Avantageusement, les réactifs introduits dans la cuve 54 sont successivement un coagulant 55 ; des réactifs d'appoint 56 tels que le bioxyde de chlore, la soude, l'hypochlorique de sodium (en cas de pollution par le manganèse) ; du charbon actif en poudre 57, essentiellement pour faire face aux pollutions par substances non biodégradables éliminables facilement par adsorption.

La coagulation est une action physico-chimique qui a pour but de modifier l'état des particules contenues dans l'eau brute et principalement des particules colloïdales chargés d'électricité négative. Dans l'eau, ces particules ont tendance à exercer une action électrique répulsive ; pour pouvoir les éliminer par décantation, il convient donc de neutraliser leurs charges électriques en ajoutant un coagulant ionisé positivement. Ce coagulant, par exemple du polychorure d'aluminium (W.A.C.) ou du chlorosulfate ferrique (CSF), permet la formation immédiate de flocons très fins.

Les différents compartiments de la cuve 54, ainsi que l'entrée du module 52 de floculation-décantation comportent des agitateurs 58.

A l'étape 52, la floculation a pour objet de permettre le grossissement et l'alourdissement de ces flocons. D'autre part, la décantation a pour but d'éliminer, sous la seule action de la pesanteur, la majeure partie des flocons formés au cours des phases précédentes. Elle est réalisée dans des décanteurs couloirs 59 en béton précontraint comportant trois ou quatre compartiments superposés.

Les boues sont éliminées par des conduites d'évacuation 60.

Dans la dernière étape 53, à l'issue de la décantation, l'eau est admise sur des filtres à sable. A titre d'exemple non limitatif, on peut utiliser des filtres comprenant une couche de sable de filtration de l'ordre de 50 cm à 1,50 m d'épaisseur, pour une taille effective de grains inférieure à 0,8 mm, préférentiellement inférieure à 0,5 mm.

Les traitements représentés en figure 3 à titre d'exemple correspondent à des filtres ouverts, mais on utilisera préférentiellement des filtres fermés. L'intertraitement par injection de réactif chimique est ensuite réalisé en sortie de cette étape 53 de filtration.

Dans un autre mode de réalisation non représenté, l'installation de prétraitement peut aussi être constituée par des batteries de microfiltration ou d'ultrafiltration.

On peut également envisager par exemple d'insérer sélectivement la filière ozone-charbon de la figure 3, et/ou l'installation de micro ou d'ultrafilatration, sous commande de la centrale de contrôle 30 de la figure 2, en fonction de la qualité de l'installation de prétraitement 21.

La chaîne de traitement de l'invention est applicable à de nombreux cas de figures.

Elle est par exemple bien adaptée à l'élimination des sulfates d'exhaures de mines de fer désaffectées. On constate en effet dans ce type de mine des remontées d'eau, avec solubilisation des pyrites. On détecte alors une forte teneur en sulfate, qui appelle une désulfatation. La membrane de nanofiltration utilisée comme barrière de sécurité est bien adaptée à ce type de traitement.

La figure 4 représente un autre cas de figure d'une eau présentant une grande variabilité de micropollution au tétrachloroéthylène.

L'eau utilisée pour les essais est d'origine souterraine. L'ouvrage de captage est un puits de 10 m de profondeur environ. Le débit de pompage s'élève à 80 m³/h et la population distribuée comprend 6 000 personnes environ. La capacité de production de l'usine atteint au maximum 1 800 m³/j.

La qualité de l'eau est largement conforme aux normes françaises en vigueur et aux normes C.E.E. Cette eau est moyennement minéralisée et se situe à l'équilibre calco-carbonique.

La pollution au trichloréthylène évolue dans l'année entre 20 µg/l et 50 µg/l environ. L'opération d'élimination de cette micropollution variable peut être réalisée de façon optimale en utilisant une chaîne de traitement selon l'invention.

Une application avantageuse spécifique de la chaîne de traitement de l'invention est la lutte contre la micropollution radioactive. La pollution radioactive, notamment la pollution par le radon, est essentiellement concentrée sur les colloïdes. En conséquence, une membrane de nanofiltration utilisée comme barrière de sécurité constitue une protection efficace, par rétention des particules radioactives. Ce procédé est notamment beaucoup plus sûr que la filtration par Charbon Actif en Grains, qui relargue lentement la pollution radioactive après avoir joué le rôle de barrière.

Une autre application spécifique avantageuse est l'élimination de carbone organique dissous biodégradable. Dans les traitement classiques par la filière ozone-charbon, la lutte contre la pollution organique s'organise de la façon suivante :
l'ozone casse les grosses molécules organiques, et le Charbon Actif en Grains retient les chaînes moléculaires résultantes. Toutefois, il reste toujours du carbone organique résiduel en sortie de filière. L'utilisation d'une membrane de nanofiltration constitue une barrière de sécurité efficace pour la rétention de ce carbone organique résiduel.

Des essais comparatifs ont été menés, et ont fourni les résultats présentés ci-après.

| | PRETRAITEMENT PAR FILTRATION SUR SABLE | TRAITEMENT COMPLEMENTAIRE PAR NANOFILTRATION |
|---|---|---|
| COD total du filtrat (mg/l) | 2,9 | 0,3 |
| dont : COD Biodégradable (mg/l) | 0,6 | < 0,1 |
| dont : COD Réfractaire (mg/l) | 2,3 | 0,3 |

La première colonne fournit le taux de COD (Carbone Organique Dissous) mesuré sur une eau témoin traitée, en sortie d'une unité de traitement par filtration sur sable. L'analyse du filtrat permet de détecter un taux de 2,9 mg/l décomposé en 0,6 mg/l de COD biodégradable (analysé par test spécifique de biodégradabilité), et 2,3 mg/l de COD réfractaire (non biodégradable).

La même eau a ensuite subi un traitement complémentaire de nanofiltration. Le COD total en sortie de nanofiltration a baissé considérablement (0,3 mg/l), avec une disparition totale de COD biodégradable (< 0,1 mg/l, la limite de résolution du test de biodégradabilité). Ce résultat est extrêmement favorable, car le COD biodégradable est source de développement bactérien sur le réseau en aval de l'installation.

La figure 5 schématise un agencement spécifique de membranes de nanofiltration et d'osmose inverse utilisable comme barrière de sécurité.

Cet agencement, comme représenté, consiste à utiliser une membrane de nanofiltration tangentielle, formant un premier étage de filtration, et à la faire suivre d'au moins une membrane d'osmose inverse montée en "série-rejet" en aval de ladite membrane de nanofiltration. Le filtrat issu de la barrière de sécurité est ensuite constitué de la jonction des filtrats issus de l'ensemble des membranes de nanofiltration et d'osmose inverse.

Plus précisément, dans le mode de réalisation de la figure 5, une membrane de nanofiltration 61 reçoit en entrée une eau à traiter 60, et fournit un filtrat 62 et un concentrat 63. Le concentrat 63 est pompé à l'aide de la pompe 64 en direction d'une première membrane d'osmose inverse 71, qui fournit un filtrat 72 et un concentrat 73. Le concentrat 73 est à son tour dirigé vers une seconde membrane d'osmose inverse 81, produisant un filtrat 82 et un concentrat 83.

La barrière de sécurité ainsi constituée fournit un filtrat total 90 constitué de la conjonction des filtrats 62, 72 et 82 provenant des membranes 61, 71 et 81. Le concentrat général 83 est évacué par exemple vers une unité de traitement ultérieur.

La membrane de nanofiltration 61 est du type présenté plus haut. Les membranes d'osmose inverse 71 et 81 peuvent avantageusement être du même principe général de constitution que la membrane de nanofiltration 61, mais avec des caractéristiques mécaniques et un pouvoir de coupure permettant un fonctionnement osmotique plus poussé.

La membrane de nanofiltration est définie par exemple comme une membrane ayant un pouvoir de coupure permettant de retenir la micropollution organique (pouvoir de coupure (rejet à plus de 95 %) de l'ordre de 1 nm à 10 nm environ, 1 nm correspondant à des poids moléculaires de l'ordre de 200 environ); les membranes d'osmose inverse permettent de retenir les ions (pouvoir de coupure de 100 Å à 1 nm environ). Toutefois, plus généralement, l'agencement de la figure 5 convient dans la mesure où le premier étage 61 présente un pouvoir de coupure inférieur aux étages suivants 71, 81.

L'agencement ainsi présenté comporte un premier avantage sous l'angle des pressions d'alimentation. La membrane de nanofiltration 61 est par exemple alimentée sous 8 bar environ. Du fait des pertes de charge dans la chambre d'alimentation de la membrane 61, le concentrat 63 se trouve à une pression un peu inférieure, par exemple de l'ordre de 6,5 bar. Pour monter la pression du concentrat jusqu'à une valeur compatible avec le traitement osmotique dans les membranes 71, 81, il suffit alors d'une pompe 64 induisant un différentiel de pression de 8,5 bar environ pour atteindre les 15 bar environ nécessaires à l'osmose inverse.

On réalise ainsi une économie d'énergie électrique du fait de la récupération de l'énergie hydraulique du concentrat 63 de l'étage de nanofiltration 61.

Cet agencement permet d'améliorer le rendement d'élimination des micropolluants retenus dans ce type de membrane. Ainsi, si on prend le cas des pesticides (atrazine, ...) ou du fluor, dont le taux d'abattement est d'environ 60 % en nanofiltration, et si l'on considère que chacune des membranes 61, 71, 81 présente un facteur de conversion de l'ordre de 50 % (cas de tubes à six éléments), on obtient successivement les débits et les concentrations en atrazine suivants :
- pour un débit 100 et une concentration en atrazine 100 en entrée de la membrane de nanofiltration 61, on obtient un filtrat 62 de débit 50 et de concentration 40, en appliquant une valeur de 50 % pour le facteur de conversion de l'étage, et une valeur de 60 % pour le taux d'abattement de l'atrazine ;
- en entrée du second étage 71, le débit vaut également 50 (débit du concentrat 63), et la concentration en atrazine est montée à 160. Si l'on considère un taux d'abattement de l'atrazine de l'ordre de 95 % sur l'ensemble des deux étages de membranes d'osmose inverse 71 et 81, avec un facteur de conversion global de l'ordre de 75 %, on obtient un filtrat global 70 de débit 37,5, et de concentration 8. Le concentrat général 83 présente un débit de 12,5.

La conjonction du filtrat 62 de la membrane de nanofiltration 61, et du filtrat 70 des deux étages d'osmose inverse 71, 81 fournit alors un filtrat général 90 de débit 87,5, avec une concentration en atrazine valant 27.

En d'autres termes, on a réalisé une barrière de sécurité présentant un facteur de conversion global de 87,5 %, avec un taux d'abattement d'atrazine de 73%, ce qui correspond à une amélioration de près de 22 % du taux d'abattement par rapport à l'utilisation d'un étage unique de nanofiltration 61.

Cette configuration est également avantageuse par rapport à une technique consistant à n'utiliser que l'osmose inverse. En effet, l'agencement de la figure 5 permet de ne pas trop déminéraliser le perméat, du fait de la présence du filtrat de nanofiltration 62.

En outre, cet agencement permet d'optimiser l'étage de nanofiltration 61, en lui conférant un faible taux de conversion, ce qui permet d'améliorer le taux d'abattement des micropolluants. Le fait de prévoir une nanofiltration sur un seul étage permet également d'ajuster la pression d'alimentation à la valeur juste nécessaire pour l'étage, et non pas pour l'alimentation d'autres étages. De même, le fait de prévoir deux étages 71, 81 d'osmose inverse permet de les alimenter à l'aide d'une pompe complémentaire 64 unique.

Enfin, le traitement ainsi réalisé permettra généralement d'éviter un post-traitement final (classiquement H₂O₂ et/ou O₃ et/ou CAG), du fait de l'amélioration du taux d'abattement.

Au total, la barrière de sécurité ainsi présentée ne correspond plus ni à de la nanofiltration, ni à de l'osmose inverse, mais à une technique séparative intermédiaire.

Selon un autre mode de réalisation de l'invention l'abattement des micropolluants peut encore être amélioré.

En remplaçant l'un des capteurs 27, 28 ou 29 de l'exemple précedemment décrit par un capteur de C.O.T. mesurant la charge organique totale, il est possible d'ajuster la teneur en matière organique de l'eau arrivant au niveau de la membrane de nanofiltration 61 de façon à ce que cette eau présente un taux de matière organique suffisant permettant d'augmenter le taux d'élimination des micropolluants. En ajustant le taux de matière organique de l'eau issue de l'étape de filtration sur sable 53 à 3,6 mg/l on peut ainsi obtenir un abbatement de 92,5% de la simazine, alors qu'une clarification poussée, permettant d'obtenir un taux de matière organique à la sortie de l'étape de filtration sur sable 53 de 0,5 mg/l ne permet que d'obtenir un abbattement de 68 % (voir tableau ci-après).

| Teneur en C.O.T. | Teneur en simazine eau brute | Teneur en simazine permeat | Teneur en simazine concentrat | % abattement |
|---|---|---|---|---|
| 3,6 mg/l | 0,8µg/l | 0,06µg/l | 2,87µg/l | 92,5 |
| 0,5 mg/l | 0,265 µg/l | 0,085 µg/l | 1,24 µg/l | 68 |

La teneur en matière organique peut être ajustée, soit en agissant sur le fonctionnement de la chaîne de prétraitement 21 de façon à ce que celle-ci aboutisse à une eau prétraitée présentant un taux suffisant de matière organique, soit en ajoutant de la matière organique à l'eau prétraitée, par exemple sous forme d'au moins un composé biocide ou d'un excès de polymère. A ce titre, le laurylsulfate de sodium (dodécylsulfate de sodium) s'est avéré particulièrment intéressant pour renforcer l'élimination de nombreux micropolluants. Le tableau ci-après montre que ce composé contribue ainsi à l'élimination totale de certains polluants organochlorés tels que le bromoforme et le tétrachloroéthylène.

Les pourcentages d'abattement des micropolluants ainsi obtenus sont supérieurs à ceux obtenus avec les membranes de nanofiltration les plus performantes telles que la membrane NF70 commercialisée par la société DOW CHEMICAL, lorsqu'elle est utilisée sur une eau dont on a éliminé au maximum la matière organique.

| composés étudiés | masse molaire (g/mol) | eau brute µg/l | | perméat µg/l | | volume de perméat en litres | % d'élimination | |
|---|---|---|---|---|---|---|---|---|
| | | avec lauryl | sans lauryl | avec lauryl | sans lauryl | | avec lauryl | sans lauryl |
| Bromoforme | 252 | 8,7 | 47,8 | 0,0 | 6,0 | 10 | 100 | 87 |
| | | 12,1 | 87,0 | 0,0 | 4,4 | 40 | 100 | 95 |
| | | 10,8 | 88,0 | 0,0 | 7,5 | 80 | 100 | 91 |
| Trichlorotrifluoroéthane | 187 | 3,9 | 6,7 | 0,7 | 7,1 | 10 | 82 | 0 |
| | | 6,7 | 18,5 | 1,6 | 3,4 | 40 | 76 | 82 |
| | | 9,8 | 31,4 | 1,9 | 82,0 | 80 | 81 | -160* |
| Tétrachloroéthylène | 166 | 0,4 | 4,8 | 0,0 | 1,20 | 10 | 100 | 75 |
| | | 0,8 | 10,5 | 0,0 | 0,16 | 40 | 100 | 98 |
| | | 1,3 | 14,6 | 0,0 | 0,16 | 80 | 100 | 100 |
| Trichloro1,1,1 éthane | 133 | 4,5 | 6,5 | 1,7 | 6,3 | 10 | 62 | 3 |
| | | 7,8 | 16,7 | 3 | 4,4 | 40 | 62 | 74 |
| | | 11,4 | 22,6 | 3,6 | 8,6 | 80 | 68 | 62 |
| Chloroforme | 119 | 5,6 | 31,2 | 0,7 | 11,2 | 10 | 88 | 64 |
| | | 8,9 | 3,4 | 1,3 | 4,7 | 40 | 85 | -38* |
| | | 7,9 | 25,6 | 2,3 | 9,0 | 80 | 71 | 65 |

| | | | | | | | | |
|---|---|---|---|---|---|---|---|---|
| *les rendements négatifs correspondent aux phénomènes de relargage. | | | | | | | | |

## Revendications

1. Chaîne de traitement des eaux de surface du type susceptible de présenter une grande variabilité de qualité, notamment en vue de leur potabilisation, comprenant:
- une installation de prétraitement (21);
- une barrière de sécurité (24) montée en sortie de la chaîne de traitement et constituée d'un filtre physique assurant en sortie dudit filtre une qualité minimale prédéterminée quelque soit la qualité de l'eau en entrée dudit filtre;
caractérisée en ce que ladite barrière de sécurité est constituée par au moins une membrane de nanofiltration et en ce qu'elle comprend de plus:
- des moyens de mesure (27,28,29) d'une information de qualité courante d'eau fournie situés en entrée de ladite barrière de sécurité (24) appartennant au groupe constitué par les capteurs de turbidité, de pH, de résistivité, de C.O.T., d'absorption U.V, de mesure de la teneur en baryum ; et,
- des moyens d'ajustement (30) de l'intensité de traitement de ladite installation de prétraitement (21) reliés auxdits moyens de mesure (27,28,29).

2. Chaîne de traitement selon la revendication 1 caractérisée en ce que lesdits moyens de mesure (27,28,29) sont situés au niveau d'une cartouche de préfiltration (22) de protection montée en amont immédiat de ladite barrière de sécurité (24).

3. Chaîne de traitement selon la revendication 1 ou 2 caractérisée en ce que lesdits moyens de mesure sont constitués par un capteur de C.O.T.

4. Chaîne de traitement selon l'une quelconque des revendications 1 à 3 caractérisée en ce que ladite installation de prétraitement comprend une unité de filtration sur sable, dont les grains de sable ont une taille effective inférieure à 0,8 mm, préférentiellement inférieure à 0,5 mm.

5. Chaîne de traitement selon l'une quelconque des revendications 1 à 4 caractérisée en ce que ladite installation de prétraitement comprend une chaîne de clarification du type formée d'une séquence floculation/décantation/filtration-sur-sable.

6. Chaîne de traitement selon l'une quelconque des revendications 1 à 5 caractérisée en ce que ladite installation de prétraitement (21) comprend une installation de microfiltration et/ou d'ultrafiltration.

7. Chaîne de traitement selon l'une quelconque des revendications 4 à 6 caractérisée en ce qu'elle comprend des moyens d'insertion séléctive, dans ladite installation de prétraitement, de ladite unité de filtration sur sable et/ou de ladite chaîne de clarification et/ou de ladite installation de microfiltration et/ou d'ultrafiltration.

8. Chaîne de traitement selon l'une quelconque des revendications 1 à 9 caractérisée en ce que lesdits moyens de mesure (27,28,29) comprennent des moyens d'émission d'un signal d'alerte.

9. Chaîne de traitement selon l'une quelconque des revendications 1 à 8 caractérisée en ce que ladite barrière de sécurité comprend au moins une membrane présentant un pouvoir de rétention des molécules de poids moléculaire supérieur à 200 - 300.

10. Chaîne de traitement selon l'une quelconque des revendications 1 à 9 caractérisée en ce que ladite barrière de sécurité est constituée d'une première membrane (61) présentant un premier pouvoir de coupure, couplée à au moins une seconde membrane (71, 81) présentant un second pouvoir de coupure supérieur audit premier pouvoir de coupure, ladite seconde membrane (71, 81) étant montée en "série-rejet" en aval de ladite première membrane 61, le filtrat général (90) produit par ladite barrière de sécurité étant formé par la conjonction des filtrats 62, 70) issus le l'ensemble desdites membranes (61, 71, 81).

11. Chaîne de traitement selon l'une quelconque des revendications 1 à 10 caractérisée en ce que ladite membrane de nanofiltration (24) est une membrane de nanofiltration utilisable à faible pression, de 4 à 30 bar, préférentiellement 5 à 10 bar.

12. Chaîne de traitement selon l'une quelconque des revendications 1 à 11 caractérisée en ce qu'une unité de filtration par Charbon Actif en Grains est montée en aval de ladite barrière de sécurité.

13. Chaîne de traitement selon l'une quelconque des revendications 1 à 12 caractérisée en ce que ladite barrière de sécurité (24) est associée à une conduite de dérivation (32) permettant de bipasser ladite membrane sur détection d'une qualité d'eau dépassant un seuil de risque de colmatage et/ou de destruction prédéterminé pour la membrane.

14. Chaîne de traitement selon l'une quelconque des revendications 1 à 13 caractérisée en ce qu'elle comprend des moyens (34) d'injection de réactifs chimiques en amont de ladite barrière de sécurité en réponse à une mesure de pH et/ou de concentration saline prédéterminée.

15. Chaîne de traitement selon l'une quelconque des revendications 1 à 11 caractérisée en ce qu'elle comprend des moyens de traitement par couplage ozone/peroxyde et/ou ozone/traitement catalytique pour traiter le rétentat (26) de ladite membrane de nanofiltration (24).

16. Procédé de mise en oeuvre de la chaîne de traitement selon l'une des revendications 3 à 15, caractérisé en ce qu'il consiste à ajuster le taux de matière organique présente dans l'eau arrivant au niveau de ladite barrière de sécurité (24), de façon à fixer ce taux dans une fourchette de valeurs optimales d'élimination des micropolluants.

17. Procédé selon la revendication 16 caractérisé en ce que ladite étape du procédé consistant à ajuster le taux de matière organique de l'eau arrivant au niveau de ladite barrière de sécurité (24) est effectuée en maintenant le taux de matière organique naturelle dans l'eau prétraitée par ladite installation de prétraitement (21) dans ladite fourchette de valeurs optimales.

18. Procédé selon la revendication 16 caractérisé en ce que ladite étape consistant à ajuster le taux de matière organique de l'eau arrivant au niveau de ladite barrière de sécurité (24) est effectuée en ajoutant à l'eau prétraitée une quantité donnée de matière organique permettant de fixer le taux de matière organique dans ladite fourchette de valeurs optimales.

19. Procédé selon l'une des revendication 16 à 18 caractérisé en ce que ladite étape consistant à ajuster le taux de matière organique est accompagné d'une étape consistant à ajouter au moins un composé biocide non-oxydant à l'eau arrivant au niveau de ladite barrière de sécurité.

20. Procédé selon la revendication 18 caractérisé en ce que ladite matière organique ajoutée peut être constituée au moins en partie par au moins un composé biocide.

21. Procédé selon la revendication 18 caractérisé en ce que ladite matière organique ajoutée peut être constituée par au moins un polymère anionique, cationique ou non ionique utilisé(s) dans la phase de clarification de l'eau à un taux tel qu'il permette également de favoriser l'élimination des micropolluants.

22. Application de la chaîne de traitement selon l'une quelconque des revendications 1 à 15 comme barrière de protection contre la micropollution radioactive.

23. Application de la chaîne de traitement selon l'une quelconque des revendications 1 à 15 comme barrière de protection contre le carbone organique dissous.

## Claims

1. Treatment line for surface water of the type liable to display great variability in quality, notably for a view to making it potable, comprising:
- a pretreatment installation (21);
- a safety barrier (24) mounted at the output from the processing line and consisting of a physical filter ensuring, at the outlet from the said filter, a minimum predetermined quality whatever the quality of the water at the inlet to the said filter;
characterised in that the said safety barrier consists of at least one nanofiltration membrane and in that it also comprises:
- means (27, 28, 29) of measuring a current item of water quality information supplied, situated at the entry to the said safety barrier (24), belonging to the group consisting of sensors for turbidity, pH, resistivity, TOC, UV absorption and barium content measurement; and
- means (30) of adjusting the treatment intensity of the said pretreatment installation (21), connected to the said measuring means (27, 28, 29).

2. Treatment line according to Claim 1, characterised in that the said measuring means (27, 28, 29) are situated at the level of a protective prefiltration cartridge (22) mounted immediately upstream of the said safety barrier (24).

3. Treatment line according to Claim 1 or 2, characterised in that the said measuring means consist of a TOC sensor.

4. Treatment line according to any one of Claims 1 to 3, characterised in that the said pretreatment installation comprises a sand filtration unit, in which the sand grains have an effective size below 0.8 mm, and preferably below 0.5 mm.

5. Treatment line according to any one of Claims 1 to 4, characterised in that the said pretreatment installation comprises a clarification line of the type formed by a flocculation/decantation/sand filtration sequence.

6. Treatment line according to any one of Claims 1 to 5, characterised in that the said pretreatment installation (21) comprises a microfiltration and/or ultrafiltration installation.

7. Treatment line according to any one of Claims 4 to 6, characterised in that it comprises means of selective insertion, in the said pretreatment installation, of the said sand filtration unit and/or of the said clarification line and/or of the said microfiltration and/or ultrafiltration installation.

8. Treatment line according to any one of Claims 1 to 9, characterised in that the said measuring means (27, 28, 29) comprise means of emitting a warning signal.

9. Treatment line according to any one of Claims 1 to 8, characterised in that the said safety barrier comprises at least one membrane having a retention capacity for molecules with a molecular weight greater than 200-300.

10. Treatment line according to any one of Claims 1 to 9, characterised in that the said safety barrier consists of a first membrane (61) having a first retention capacity, coupled to at least one second membrane (71, 81) having a second retention capacity greater than the said first retention capacity, the said second membrane (71, 81) being mounted in "series-rejection" mode downstream of the said first membrane 61, the general filtrate (90) produced by the said safety barrier being formed by the conjunction of the filtrates (62, 70) coming from all the said membranes (61, 71, 81).

11. Treatment line according to any one of Claims 1 to 10, characterised in that the said nanofiltration membrane (24) is a nanofiltration membrane which can be used at low pressure, from 4 to 30 bar, and preferably 5 to 10 bar.

12. Treatment line according to any one of Claims 1 to 11, characterised in that a granular activated carbon filtration unit is mounted downstream of the said safety barrier.

13. Treatment line according to any one of Claims 1 to 12, characterised in that the said safety barrier (24) is associated with a bypass pipe (32) for bypassing the said membrane upon detection of a water quality beyond a threshold of risk of clogging and/or destruction predetermined for the membrane.

14. Treatment line according to any one of Claims 1 to 13, characterised in that it comprises means (34) of injecting chemical reagents upstream of the said safety barrier in response to a predetermined saline concentration and/or pH measurement.

15. Treatment line according to any one of Claims 1 to 11, characterised in that it comprises means of treatment by ozone/peroxide coupling and/or ozone/catalytic treatment for treating the retentate (26) of the said nanofiltration membrane (24).

16. Method of using the treatment line according to one of Claims 3 to 15, characterised in that it consists of adjusting the level of organic material present in the water arriving at the said safety barrier (24), so as to fix this level within a range of optimum values for eliminating micropollutants.

17. Method according to Claim 16, characterised in that the said step of the method consisting of adjusting the level of organic material in the water arriving at the said safety barrier (24) is performed by maintaining the level of natural organic material in the water pretreated by the said pretreatment installation (21) within the said range of optimum values.

18. Method according to Claim 16, characterised in that the step consisting of adjusting the level of organic material in the water arriving at the said safety barrier (24) is performed by adding to the pretreated water a given quantity of organic material enabling the level of organic material to be fixed within the said range of optimum values.

19. Method according to one of Claims 16 to 18, characterised in that the said step consisting of adjusting the level of organic material is accompanied by a step consisting of adding at least one non-oxidising biocide compound to the water arriving at the said safety barrier.

20. Method according to Claim 18, characterised in that the said added organic material can consist at least partly of at least one biocide compound.

21. Method according to Claim 18, characterised in that the said added organic material can consist of at least one anionic, cationic or non-ionic polymer used in the phase of clarifying the water at a level such that it also promotes the elimination of micropollutants.

22. Application of the treatment line according to any one of Claims 1 to 15 as a protective barrier against radioactive micropollution.

23. Application of the treatment line according to any one of Claims 1 to 15 as a protective barrier against dissolved organic carbon.

## Patentansprüche

1. Hintereinander angeordnete Aufbereitungsvorrichtung für Oberflächenwasser, welche eine große Qualitätsbreite liefern kann, insbesondere bezüglich der Trinkbarkeit, umfassend:
- eine Vorbehandlungsvorrichtung (21);
- eine am Ausgang der Aufbereitungsvorrichtung angeordnete Sicherheitsbarriere (24), bestehend aus einem physikalischen Filter, welcher am Ausgang des Filters eine Mindestqualität sicherstellt, die durch die Wasserqualität am Eingang des Filters vorgegeben ist,
dadurch gekennzeichnet, daß die Sicherheitsbarriere mindestens aus einer Nanofiltermembran besteht und zusätzlich umfaßt:
- Meßmittel (27, 28, 29) für Informationen über die ständige Qualität des zugeführten Wassers, die am Eingang der Sicherheitsbarriere (24) angeordnet sind und aus Meßwertaufnehmern für den Trübungsgrad, den pH-Wert, den spezifischen Widerstand, den C.O.T-Wert, die UV-Absorption, und der Messung des Bariumgehalts bestehen; und
- Mittel zur Einstellung (30) der Intensität der Aufbereitung seitens der Vorbehandlungsvorrichtung (21) unter Zugrundelegung der Meßmittel (27, 28, 29).

2. Aufbereitungsvorrichtung nach Anspruch 1,
dadurch gekennzeichnet, daß die Meßmittel (27, 28, 29) auf gleicher Höhe mit einer Schutz-Vorfilterpatrone (22) angeordnet sind, die stromaufwärts unmittelbar an der Sicherheitsbarriere (24) befestigt ist.

3. Aufbereitungsvorrichtung nach Anspruch 1 oder 2,
dadurch gekennzeichnet, daß die Meßmittel aus einem C.O.T.-Meßwertaufnehmer bestehen.

4. Aufbereitungsvorrichtung nach einem der Ansprüche 1 bis 3,
dadurch gekennzeichnet, daß die Vorbehandlungsvorrichtung eine Filtereinheit für Sand umfaßt, dessen Sandkörner eine effektive Größe kleiner als 0,8 mm, vorzugsweise kleiner als 0,5 mm aufweisen.

5. Aufbereitungsvorrichtung nach einem der Ansprüche 1 bis 4,
dadurch gekennzeichnet, daß die Vorbehandlungsvorrichtung eine Klärkette umfaßt, welche aus einer Abfolge von Ausflockung, Abgießen und Filtration des Sandes gebildet wird.

6. Aufbereitungsvorrichtung nach einem der Ansprüche 1 bis 5,
dadurch gekennzeichnet, daß die Vorbehandlungsvorrichtung (21) eine Vorrichtung zur Mikrofiltration und/oder Ultrafiltration umfaßt.

7. Aufbereitungsvorrichtung nach einem der Ansprüche 4 bis 6,
dadurch gekennzeichnet, daß sie selektionierende Einfügemittel in der Vorbehandlungsvorrichtung, der Filtereinheit für Sand und/oder der Klärkette und/oder der Vorrichtung zur Mikrofiltration und/oder Ultrafiltration umfaßt.

8. Aufbereitungsvorrichtung nach einem der Ansprüche 1 bis 7,
dadurch gekennzeichnet, daß die Meßmittel (27, 28, 29) Mittel zur Aussendung eines Warnsignals umfassen.

9. Aufbereitungsvorrichtung nach einem der Ansprüche 1 bis 8,
dadurch gekennzeichnet, daß die Sicherheitsbarriere mindestens eine Membran umfaßt, die imstande ist, Moleküle mit einem Molekulargewicht größer als 200 - 300 zurückzuhalten.

10. Aufbereitungsvorrichtung nach einem der Ansprüche 1 bis 9,
dadurch gekennzeichnet, daß die Sicherheitsbarriere aus einer ersten Membran (61) besteht, die ein erstes Abscheidevermögen besitzt und mit mindestens einer zweiten Membran (71, 81) gekoppelt ist, die ein zweites Abscheidevermögen besitzt, welches dem ersten Abscheidevermögen überlegen ist, wobei die zweite Membran (71,81) in Serie stromabwärts der ersten Membran (61) angeordnet ist, und wobei das gesamte Filtrat (90), welches die Sicherheitsbarriere passiert, aus der Zusammennahme der Filtrate (62, 70) gebildet wird, die von den Membranen (61, 71, 81) insgesamt abgegeben werden.

11. Aufbereitungsvorrichtung nach einem der Ansprüche 1 bis 10,
dadurch gekennzeichnet, daß die Nanofiltermembran (24) eine Nanofiltermembran zum Gebrauch bei niedrigem Druck von 4 bis 30 bar darstellt, vorzugsweise bei 5 bis 10 bar.

12. Aufbereitungsvorrichtung nach einem der Ansprüche 1 bis 11,
dadurch gekennzeichnet, daß eine Filtereinheit mit Körnern aus Aktivkohle stromabwärts der Sicherheitsbarriere angeordnet ist.

13. Aufbereitungsvorrichtung nach einem der Ansprüche 1 bis 12,
dadurch gekennzeichnet, daß die Sicherheitsbarriere (24) mit einer Abzweigeleitung (32) verbunden ist, die eine Umgehung der Membran erlaubt, wenn die Wasserqualität einen für die Membran vorgegebenen Risikoschwellenwert übersteigt, bei dem die Membran verstopft oder zerstört wird.

14. Aufbereitungsvorrichtung nach einem der Ansprüche 1 bis 13,
dadurch gekennzeichnet, daß sie Injektionsmittel für reaktive Chemikalien stromaufwärts der Sicherheitsbarriere umfaßt, welche auf einen vorgegebenen pH-Meßwert und/oder einen vorgegebenen Meßwert der Salzkonzentration antworten.

15. Aufbereitungsvorrichtung nach einem der Ansprüche 1 bis 11,
dadurch gekennzeichnet, daß sie Aufbereitungsmittel zur Kopplung mit Ozon-/Peroxid- und/oder Ozon-/katalytischer Behandlung umfassen, um den Rückhalt (26) der Nanfiltermembran zu behandeln.

16. Verfahren zur Aufbereitung mittels der Aufbereitungsvorrichtung nach einem der Ansprüche 3 bis 15,
dadurch gekennzeichnet, daß es darin besteht, den Anteil an organischer Materie im auf Höhe der Sicherheitsbarriere (24) ankommenden Wasser einzustellen, indem dieser Anteil innerhalb eines optimalen Wertebereichs, bei der die Mikroverunreinigungen vernichtet werden, festgelegt wird.

17. Verfahren nach Anspruch 16,
dadurch gekennzeichnet, daß der Verfahrensschritt der Einstellung des Anteils organischer Materie im auf Höhe der Sicherheitsbarriere (24) ankommenden Wassers ausgeführt wird, indem der Anteil natürlicher organischer Materie im durch die Vorbehandlungsvorrichtung (21] vorbehandelten Wasser im optimalen Wertebereich gehalten wird.

18. Verfahren nach Anspruch 16,
dadurch gekennzeichnet, daß der Verfahrensschritt der Einstellung des Anteils organischer Materie im auf Höhe der Sicherheitsbarriere (24) ankommenden Wassers ausgeführt wird, indem dem vorbehandelten Wasser eine Menge an organischer Materie hinzugefügt wird, welche es erlaubt, den Anteil organischer Materie im optimalen Wertebereich festzulegen.

19. Verfahren nach einem der Ansprüche 16 bis 18,
dadurch gekennzeichnet, daß der Verfahrensschritt der Einstellung des Anteils organischer Materie von einem Verfahrensschritt begleitet wird, in welchem mindestens eine keimtötende nicht-oxidierende Verbindung dem auf Höhe der Sicherheitsbarriere ankommenden Wassers zugesetzt wird.

20. Verfahren nach Anspruch 18,
dadurch gekennzeichnet, daß die hinzugefügte organische Materie mindestens teilweise aus einer keimtötenden Verbindung besteht.

21. Verfahren nach Anspruch 18,
dadurch gekennzeichnet, daß die hinzugefügte organische Materie mindestens teilweise aus einem anionischen, kationischen oder nicht-ionischen Polymer besteht, welches in der Klärphase des Wassers in einer Menge benutzt wird, die gleichermaßenm das Abtöten von Mikroverunreinigungen begünstigt.

22. Anwendung der Aufbereitungsvorrichtung nach einem der Ansprüche 1 bis 15 als Schutzbarriere gegen radioaktive Mikroverunreinigung.

23. Anwendung der Aufbereitungsvorrichtung nach einem der Ansprüche 1 bis 15 als Schutzbarriere gegen gelösten organischen Kohlenstoff.
